# EUROPEAN PATENT APPLICATION

(11) **EP 4 733 285 A1**
(43) Date of publication of application: **29.04.2026**
(21) Application number: 24208377.2
(22) Date of filing: 23.10.2024
(51) Int. Cl.: C04B 28/02, C04B 40/00, C04B 111/10

(54) **ADMIXTURES TO INCREASE THE LATE STRENGTH OF CEMENTITIOUS COMPOSITIONS**

(71) Applicant: Sika Technology AG, 6340 Baar (CH)
(72) Inventor: FRUNZ, Lukas, 8048 Zürich (CH); SILVA, Nelson, 8048 Zürich (CH); CEREDA, Cristiano, 24033 Calusco d Adda (CH); GALLUCCI, Emmanuel, 8048 Zürich (CH)
(74) Representative: Sika Patent Attorneys

(57) **Abstract**

The present invention relates to admixtures for cementitious compositions comprising alkanolamine and one of dextrin or hydrogenated dextrin. The present invention also relates to the use of said admixture to increase the late strength of cementitious compositions and to cementitious compositions comprising said admixtures.

## Description

### Technical Field

The present invention relates to admixtures comprising alkanolamine and one of dextrin or hydrogenated dextrin and to their use to increase the late strength of cementitious compositions.

### Background of the invention

It is known that cementitious compositions such as concrete can be accelerated by the addition of various inorganic or organic accelerators. Specifically the acceleration of strength development is often targeted. A fast attainment of strength allows for fast release of a cementitious part or building for further work or for use. This allows for less downtime and significant cost savings during construction. It is also of particular interest to increase the late strength of cementitious compositions. An increase in late strength may allow to reduce cement content of a cementitious composition while still fulfilling strength requirements for a specific job.

Accelerating admixtures are therefore frequently used in the field of cementitious materials, for example during the manufacture of cement, during the batching of concrete, or in the formulation of dry mortars.

A well-known class of accelerating admixtures for faster strength development are alkanolamines. For example, US 4990190 (W.R. Grace) discloses the use of triisopropanolamine to increase the strength of cementitious compositions after 28 days.

It is also known to add dextrins to concrete formulations, for example to suppress the temperature rise during cure (US 4302251 to Denki Kagaku Kogyo). However, dextrins are not generally known to accelerate the curing or to increase the strength of cementitious compositions.

Due to the ever increasing variety of cementitious binders as well as the vast variation in construction job conditions and requirements there is a continuing demand for accelerators for cementitious compositions.

### Summary of the invention

It is an objective of the present invention to provide improved admixtures for the acceleration of curing of cementitious compositions. It is also an objective of the present invention to provide improved admixtures for the increase of late strength of cementitious compositions. In particular, the increase in late strength should be achieved for composite cements, i.e. cements comprising a cement and additional supplementary cementitious material.

It has surprisingly been found that a combination of alkanolamines with one of dextrin or hydrogenated dextrin is suitable to increase the late strength of cementitious compositions.

The objective of the present invention is therefore solved by an admixture as claimed in claim 1.

Other aspects of the present invention are the subject matter of independent claims.

Preferred embodiments are the subject matter of dependent claims.

### Detailed Ways

In a first aspect the present invention relates to an admixture for a cementitious composition, said admixture comprising or consisting of at least one alkanolamine, one of dextrin or hydrogenated dextrin, and optionally water.

It is preferred that the admixture of the present invention is free from any of lime, calcium ferrite, calcium aluminoferrite, and gypsum. This means that the content of any of lime, calcium ferrite, calcium aluminoferrite, and gypsum in an admixture of the present invention is lower than 1 w%, preferably is lower than 0.1 w%, especially is 0 w%.

A cementitious composition is a composition comprising at least one cement. A cementitious composition can also be a cement. Cements are in particular selected from Portland cements, especially Portland cements according to standard EN 197-1:2011 or EN 197-5:2021, calcium aluminate cements, especially calcium aluminate cements according to standard EN 14647:2005, and/or calcium sulfoaluminate cements.

A cement may additionally comprise pozzolanic, latent hydraulic material, and/or limestone. Pozzolanic and latent hydraulic materials preferably are selected from the group consisting of slag, especially blast furnace slag or basic oxygen furnace slag or ladle slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice or trass.

A cement may additionally comprise calcium sulfate, in particular calcium sulfate anhydrite, calcium sulfate α- and β- hemihydrate, calcium sulfate dihydrate, naturally occurring gypsum, or gypsum from industrial processes such as FGD gypsum or phosphogypsum. In particular, the amount of calcium sulfate is between 1 - 8 w%, relative to the total dry weight of cement.

The clinker content, especially the content of Portland clinker, in a cement of the present invention preferably is at least 5 w%, more preferably at least 35 w%, still more preferably at least 65 w%, especially at least 80 w%, relative to the total dry weight of the cement.

Very preferably, the cement is selected from the group consisting of CEM I, CEM II, CEM III, CEM IV, CEM V according to standard EN 197-1:2011 or EN 197-5:2021, and of CEM VI according to standard EN 197-5:2021.

A cementitious composition may additionally comprise aggregates, admixtures different from the admixture of the present invention, and water.

According to embodiments, a cementitious composition of the present invention is selected from a cement, a dry mortar, a wet mortar, or a concrete.

Alkanolamines within the present context are chemicals comprising at least one nitrogen atom and further comprising at least one hydroxy group bound to said nitrogen atom via a hydrocarbon linker. Within the present context, the term alkanolamine also includes alkanolamine N-oxides. Alkanolamine N-oxides are derived from alkanolamines by oxidation of the nitrogen atom and in comparison, to the respective alkanolamine comprise an additional N-O bond.

According to embodiments, the at least one alkanolamine is selected from the group consisting of triethanolamine, triisopropanolamine, diethanolisopropanolamine, ethanoldiisopropanolamine, N-methyldiehtanolamine, N-methyldiisopropanolamine, tetrahydroxyehtylethylenediamine, tetrahydroxyisopropylethylenediamine, as well as mixtures of two or more of these alkanolamines. A very preferred alkanolamine is triisopropanolamine.

Dextrins are low molecular weight carbohydrates produced by the hydrolysis of for example starch. Starch may be selected from potato starch, tapioca starch, corn starch, wheat starch, rice starch, and pea starch. A preferred source of starch to make dextrins of the present invention is potato starch. Dextrins within the present context can be linear or cyclic.

In principle, white, yellow, and brown dextrins can be used in an admixture of the present invention.

It is preferred that the molecular mass Mw, determined by size exclusion chromatography, of dextrins of the present invention is between 1000 - 10000 g/mol, preferably is between 4000 - 5000 g/mol. It is also preferred that dextrins of the present invention have a dextrose equivalent (DE) of higher than 20, preferably at least 30. A preferred range of DE is 20 - 98, more preferably 30 - 98. As is known to the skilled person, the DE can also be determined by size exclusion chromatography. According to embodiments, the admixture of the present invention comprises dextrin with a molecular mass Mw between 1000 - 10000 g/mol and a dextrose equivalent of higher than 20, determined by size exclusion chromatography.

Hydrogenated dextrins result from the partial hydrolysis of starch followed by hydrogenation to form sugar alcohols. Starch may be selected from potato starch, tapioca starch, corn starch, wheat starch, rice starch, and pea starch. A preferred source of starch to make hydrogenated dextrins of the present invention is corn starch. One preferred type of hydrogenated dextrins is selected from corn syrup including high fructose corn syrup.

It is preferred that hydrogenated dextrins of the present invention have a dextrose equivalent (DE) of higher than 20, preferably in the range of 20 - 70. As is known to the skilled person, the DE can also be determined by size exclusion chromatography.

Another preferred type of hydrogenated dextrin is polyglycitol syrup. Polyglycitol syrup comprises malitol and sorbitol as main constituents.

According to embodiments, the admixture of the present comprises hydrogenated dextrin in the form of corn syrup having a dextrose equivalent of higher than 20, preferably in the range of 20 - 70, determined by size exclusion chromatography.

The cold water solubility of dextrin and hydrogenated dextrin of the present invention preferably is between 50 - 90%, more preferably between 70 - 90%, in particular 75 - 90%. The cold water solubility is the ratio of dextrin or hydrogenated dextrin soluble in water at 21°C. For the measurement an amount of 10 g of dextrin or hydrogenated dextrin is added to 150 ml of water at a temperature of 21 °C and maintained at this temperature for one hour with gentle stirring. The obtained solution is filtered and the filtrate, which is undissolved dextrin or hydrogenated dextrin, is dried and weighed. The cold water solubility is calculated as the percentage of initially added dextrin or hydrogenated dextrin dissolved in water.

It is possible that an admixture of the present invention additionally comprises water. Depending on the solubility of the dextrin and hydrogenated dextrin, the admixture may then be in the form of a solution or a dispersion.

It is also possible that an admixture of the present invention comprises further components, in particular defoamers, thickeners, dispersants, and/or organic solvents.

An admixture of the present invention may be provided as a mono-component admixture or as a multi-component, especially a two-component admixture.

A mono-component admixture contains all constituents of the admixture in one container. This has the advantage that a lower number of containers has to be foreseen at the site of mixing a cementitious composition and that no mistakes with relative dosages of constituents can occur.

A multi-component admixture contains the constituents of the admixture in multiple, preferably in two, spatially separated containers. A multi-component, especially two-component, admixture has the advantage that a ratio of individual components, and thereby constituents, may be easily adjusted according to specific requirements.

According to embodiments, a weight ratio of the at least one alkanolamine to the one of dextrin or hydrogenated dextrin in an admixture of the present invention is between 1:2 - 1:5.

Admixtures of the present invention have the effect of accelerating the strength gain of cementitious compositions. Thereby, the mechanical strength, especially the compressive strength, of a cementitious composition comprising the admixture is increased after a given time of curing as compared to the mechanical strength of the same cementitious composition without the admixture cured for the same time and under same conditions.

Curing of a cementitious composition starts with the addition of water. Within the present context, curing is understood to proceed at ambient pressure of about 1013 mbar and temperatures between 5 - 50 °C.

The compressive strength preferably is measured according to standard DIN EN 1015-11:2020 or DIN EN 196-1:2016.

In particular, the late strength of a cementitious composition is increased by the use of an admixture of the present invention. The late strength refers to the mechanical strength, in particular the compressive strength, obtained after not less than 7 days, for example after 7 days, 28 days, 56 days, or 90 days, of curing of the cementitious composition.

In another aspect, the present invention therefore relates to the use of an admixture as described above to increase the late strength of a cementitious composition.

Late strength therein refers to the mechanical strength, especially compressive strength, obtained by the cementitious composition mixed with water after not less than 7 days, for example after 7 days, 28 days, 56 days, or 90 days, after mixing with water.

A difference exists between the acceleration of setting and the acceleration of curing of a cementitious composition. Setting occurs within the first minutes or hours after mixing a cementitious composition with water. Setting can be measured with the Vicat needle in accordance with standard EN 196-3:2017. Curing on the other hand proceeds within hours to days after mixing a cementitious composition with water. Strength, in particular compressive strength, of the cementitious composition is obtained as curing proceeds. Therefore, a measurement of compressive strength is suitable to follow the curing process. A such, the terms "curing" and "hardening" can be used interchangeably.

An admixture of the present invention in particular is an accelerator for the curing of a cementitious composition.

An admixture and a cementitious composition are as defined above.

In particular, the cementitious composition comprises Portland cement according to EN 197-1:2011 or EN 197-5:2021.

According to preferred embodiments, the admixture of the present invention is used to increase the late strength of a cementitious composition comprising a composite cement. A composite cement is a cement comprising cement and at least one supplementary cementitious material.

Preferred composite cements consists of Portland cement and at least one of limestone, ground granulated blast furnace slag, basic oxygen furnace slag, ladle slag, burnt shale, natural pozzolane, fly ash, and calcined clay.

Particularly preferred cements are composite cements comprising Ordinary Portland cement and limestone. Preferred composite cements additionally comprise calcium sulfate in an amount of between 1 - 8 w% relative to the total dry weight of the composite cement. Examples of preferred composite cements are cements of the type CEM ll/A-L, CEM II/B-L, CEM II/A-LL, and CEM II/B-LL. Examples of further preferred composite cements are cements comprising Ordinary Portland cement, limestone, and calcined clay.

According to embodiments, cements comprising Ordinary Portland cement (OPC), limestone (LL), and calcined clay (CC), have the following weight ratios:
OPC : CC is from 33 : 1 to 1 : 1, preferably from 8 : 1 to 1 : 1,
CC : LL is from 10 : 1 to 1 : 33, preferably from 5 : 1 to 1 : 10, and
OPC : LL is from 20 : 1 to 1 : 4, preferably from 5 : 1 to 1 : 1.

Preferably, such cements consist to at least 65 wt.-%, preferably at least 80 wt.-%, more preferably at least 92 wt.-%, in each case relative to the total dry weight of the cement, of calcined clay, limestone, and Portland cement.

According to embodiments a cement comprises a mixture of
a) 25 - 100 mass parts of Ordinary Portland cement,
b) 3 - 50 mass parts of calcined clay, especially of metakaolin,
c) 5 - 100 mass parts of limestone.

The amount of water to be added to a cementitious composition typically is between 10% - 80% relative to the dry weight of cement.

According to preferred embodiments, the admixture of the present invention is added to the cementitious composition together with the mixing water. It is, however, also possible to add the admixture of the present invention shortly before or shortly after the mixing water, especially in cases where the admixture of the present invention is a solution or dispersion in water.

According to embodiments, the admixture of the present invention is mixed with a dry cementitious composition, such as a cement or dry mortar. In such case it is highly preferred that the admixture is free from water. Free from water in this context means that the amount of water is lower than 1 w%, preferably is lower than 0.1 w%.

According to embodiments, the total amount of alkanolamine used is between 0.05 - 0.5 w% relative to dry weight of cement in the cementitious composition.

According to embodiments, the amount of dextrin or hydrogenated dextrin used is between 0.2 - 0.5 w% relative to dry weight of cement in the cementitious composition.

In embodiments where an admixture comprising at least one alkanolamine and a dextrin is used, the weight ratio of the dextrin to the sum of alkanolamine preferably is between 2-3.

In embodiments where an admixture comprising at least one alkanolamine and a hydrogenated dextrin is used, the weight ratio of the hydrogenated dextrin to the sum of alkanolamine preferably is between 3 - 5.

It is preferred that by the use of an admixture of the present invention, the compressive strength of a cementitious composition comprising said admixture as measured according to standard DIN EN 1015-11 :2020 after at least 28d of curing at 23°C and 50% r.h. is increased by not less than 10%, preferably not less than 20%, as compared to the same cementitious composition not comprising said admixture.

In another aspect, the present invention relates to a cementitious composition comprising a cement, preferably a composite cement, and, in each case relative to the total dry weight of cement,
a) 0.05 - 0.5 w% of at least one alkanolamine, and
b) 0.2 - 0.5 w% of one of dextrin or hydrogenated dextrin.

All features and embodiment described above also apply to this aspect. In particular, aggregate, fillers, and/or admixtures different from the admixture of the present invention may additionally be present.

The cementitious composition may in particular be a cement, a dry mortar, a wet mortar, or a concrete. The cementitious composition may therefore be free of water, as is the case with cement or dry mortar. The cementitious composition may therefore alco comprise water, as is the case with wet mortar or concrete.

With the addition of water, a cementitious composition of the present invention starts to cure and to develop strength.

In a last aspect the present invention relates to an object obtained by curing a cementitious composition as described above by the addition of water.

Curing in particular takes place at ambient pressure of about 1013 mbar and temperatures between 5 - 50 °C. The relative humidity during curing is not particularly limited. However, it is preferred that the relative humidity is not lower than 50%. Preferably, the amount of water added to the cementitious composition is between 10% - 80% relative to the total dry weight of cement.

The cured object may be part of a building.

### Examples

750 g of cement CEM II A/LL 42.5 N (Vigier) were dry mixed with 3890 g of aggregate (0 - 8 mm particle size) on a Hobart propeller mixer for one minute. Mixing water was added in an amount to realize a water to cement ratio of 0.53. A polycarboxylate ether superplasticizer was added in an amount of 0.2 w% relative to the weight of cement together with the mixing water. Triisopropanolamine (TIPA) and one of dextrin or hydrogenated dextrin were added in the amounts shown in tables 1 and 2 together with the mixing water. The resulting wet mix was mixed for 3 minutes. Then scraped down, allowed to stand for 30 seconds, and remixed briefly. All mixing was done at 21 °C and 50% r.h.

Flow table spread (FTS) was measured according to standard DIN EN 12350-5:2019 directly after mixing. Compressive strength (C.S.) was measured according to standard DIN EN 1015-11:2020 on prisms of size 4 x 4 x 16 cm after curing the samples for the time indicated in below tables 1 and 2 at 21 °C and 95% r.h.

**Table 1: References R1 - R7 (not according to the invention) and Examples 1 - 3 (according to the invention)**

| **Example** | **R1** | **R2** | **R3** | **1** | **R4** | **R5** | **2** | **R6** | **R7** | **3** |
|---|---|---|---|---|---|---|---|---|---|---|
| TIPA | | 0.75 | | 0.75 | 1.5 | | 1.5 | 2.25 | | 2.25 |
| Dextrin* | | | 1.76 | 1.76 | | 3.5 | 3.5 | | 5.3 | 5.3 |
| | | | | | | | | | | |
| FTS [mm] | 203 | 207 | 211 | 212 | 205 | 208 | 212 | 204 | 224 | 227 |
| C.S. 28 d [MPa] | 29 | 33 | 32 | 36 | 33 | 32 | 36 | 33 | 32 | 40 |
| C.S. 90 d [MPa] | 35 | 40 | 40 | 43 | 39 | 38 | 42 | 38 | 38 | 43 |

| | | | | | | | | | | |
|---|---|---|---|---|---|---|---|---|---|---|
| *from potato starch, Mw = 1850 g/mol, dextrose equivalent = 30. | | | | | | | | | | |

It can be seen from the results of above table 1 that the addition of an admixture comprising triisopropanolamine and dextrin at various concentrations leads to an increase in late strength. The same increase is not available when adding only one of triisopropanolamine or dextrin. Additionally, it is shown that the slump flow is increased by addition of an admixture comprising triisopropanolamine and dextrin.

**Table 2: References R1 and R8 - R13 (not according to the invention) and Examples 4 - 6 (according to the invention)**

| **Example** | **R1** | **R8** | **R9** | **4** | **R10** | **R11** | **5** | **R12** | **R13** | **6** |
|---|---|---|---|---|---|---|---|---|---|---|
| TIPA | | 0.75 | | 0.75 | 1.5 | | 1.5 | 2.25 | | 2.25 |
| Hydrogenated dextrin* | | | 3 | 3 | | 6 | 6 | | 9 | 9 |
| | | | | | | | | | | |
| FTS [mm] | 203 | 207 | 219 | 216 | 205 | 230 | 233 | 204 | 237 | 228 |
| C.S. 28 d [MPa] | 29 | 33 | 32 | 35 | 33 | 33 | 34 | 33 | 34 | 36 |
| C.S. 90 d [MPa] | 35 | 40 | 38 | 42 | 39 | 38 | 41 | 38 | 39 | 41 |

| | | | | | | | | | | |
|---|---|---|---|---|---|---|---|---|---|---|
| *hydrogenated corn syrup, dextrose equivalent = 37 | | | | | | | | | | |

It can be seen from the results of above table 2 that the addition of an admixture comprising triisopropanolamine and hydrogenated dextrin at various concentrations leads to an increase in late strength. The same increase is not available when adding only one of triisopropanolamine or hydrogenated dextrin. The slump flow obtainable when adding the admixture of the present invention is not increased versus all references but is generally on a high level.

## Claims

1. An admixture for a cementitious composition, said admixture comprising or consisting of at least one alkanolamine, one of dextrin or hydrogenated dextrin, and optionally water.

2. The admixture as claimed in claim 1, **characterized in that** it is free from any of lime, calcium ferrite, calcium aluminoferrite, and gypsum.

3. The admixture as claimed in at least one of the preceding claims, **characterized in that** the at least one alkanolamine is selected from the group consisting of triethanolamine, triisopropanolamine, diethanolisopropanolamine, ethanoldiisopropanolamine, N-methyldiehtanolamine, N-methyldiisopropanolamine, tetrahydroxyehtylethylenediamine, tetrahydroxyisopropylethylenediamine, as well as mixtures of two or more of these alkanolamines.

4. The admixture as claimed in at least one of the preceding claims, **characterized in that** it comprises dextrin with a molecular mass Mw between 1000 - 10000 g/mol and a dextrose equivalent of higher than 20, determined by size exclusion chromatography.

5. The admixture as claimed in at least one of claims 1 - 3, **characterized in that** it comprises hydrogenated dextrin in the form of corn syrup having a dextrose equivalent of higher than 20, preferably in the range of 20 - 70 determined by size exclusion chromatography.

6. The admixture as claimed in at least one of the preceding claims, **characterized in that** a weight ratio of the at least one alkanolamine to the one of dextrin or hydrogenated dextrin is between 1:2 - 1:5.

7. The use of an admixture as claimed in at least one of claims 1 - 6 to increase the late strength of a cementitious composition.

8. The use as claimed in claim 7, **characterized in that** total amount of alkanolamine used is between 0.05 - 0.5 w% relative to dry weight of cement in the cementitious composition.

9. The use as claimed in at least one of claims 7-8, **characterized in that** the dextrin or hydrogenated dextrin is used in an amount of 0.2 - 0.5 w% relative to dry weight of cement in the cementitious composition.

10. The use as claimed in at least one of claims 7-9, **characterized in that** the cementitious composition comprises a composite cement comprising cement and at least one supplementary cementitious material.

11. The use as claimed in claim 10, **characterized in that** the composite cement consists of Portland cement and at least one of limestone, ground granulated blast furnace slag, burnt shale, natural pozzolane, fly ash, calcined clay.

12. The use as claimed in at least one of claims 7 - 11, **characterized in that** the compressive strength of the cementitious composition comprising said admixture as measured according to standard DIN EN 1015-11:2020 after at least 28 days of curing at 21 °C and 95% r.h. is increased by not less than 10%, preferably not less than 20%, as compared to the same cementitious composition not comprising said admixture.

13. A cementitious composition comprising a cement, preferably a composite cement, and, in each case relative to the total dry weight of cement,
a) 0.05 - 0.5 w% of at least one alkanolamine, and
b) 0.2 - 0.5 w% of one of dextrin or hydrogenated dextrin.

14. An object obtained by curing a cementitious composition as claimed in claim 13 by the addition of water.
